# EUROPEAN PATENT APPLICATION

(11) **EP 3 680 473 A1**
(43) Date of publication of application: **15.07.2020**
(21) Application number: 19150924.9
(22) Date of filing: 09.01.2019
(51) Int. Cl.: F02D 41/22

(54) **METHOD AND DEVICE FOR OPERATING A COMBUSTION ENGINE**

(71) Applicant: Robert Bosch GmbH, 70442 Stuttgart (DE)
(72) Inventor: Palumbo, Marco, 10152 Turin (IT); Rrema, Blerta, 10152 Torino (TO) (IT); Garello, Andrea, 14100 Asti (IT)

(57) **Abstract**

The present invention relates to a method for operating a motor system including a combustion engine having cylinders and injectors to inject fuel into the cylinders, comprising the steps of:
- operating the combustion engine by providing a calculated injection quantity which corresponds to a fuel mass to be injected into the cylinders of the combustion engine to provide a motor torque;
- signaling a manipulation event depending on
∘ a first condition based on an estimated injected fuel quantity determined depending on an oxygen concentration and
∘ at least one of a second condition based on an injected fuel quantity delivered to the injectors and a third condition based on an adaption correction value obtained by an adaptation function for control of a metering unit for delivering fuel towards the injectors.

## Description

### Technical Field

The present invention relates to combustion engines, particularly to determine a manipulation of the engine aiming to boosting of engine power.

### Technical Background

Hardware manipulation of engines is very common in order to boost the engine power substantially above the nominal power of the engine. This allows to benefit from more torque and power compared to the nominal performances announced by the manufacturer.

Such a manipulation leads to operating points of the combustion engine which are untested and may result in damages to the combustion engine and its components, such as the turbocharger and the like, since they might be operated out of their specification ranges.

Two common ways to increase the power of common rail equipped Diesel engines are known. One includes the insertion of a manipulation device in the injector wiring harness between the electronic control unit and the injectors. Such a manipulation device is configured to prolong the energizing time of the injectors so that more fuel is injected into the cylinders. Due to the lack of feedback from the cylinders about the opening time of the injectors, such a manipulation cannot be detected by the control unit directly.

Another manipulation includes that a manipulation device can be inserted in the wiring harness between the electronic control unit and the rail pressure sensor for sensing the rail pressure in a common rail configuration. The manipulation device is configured to simulate and signal a lower pressure to the electronic control unit than actually exists in the common rail volume. This causes the electronic control unit to command a higher fuel delivery to reach the rail pressure set-point so that the actual rail pressure will be set higher as nominally intended. Also here, the control unit is not able to detect such a manipulation.

As manipulation devices can be removed before maintenance, possible damages of the engine or of components cannot be brought into causality with a potential manipulation.

From document DE 10 2005 047 350 A1, it is known a device for controlling an internal combustion engine wherein an actual value based on a lambda value is determined and the actual value is compared with the set-point value. A correction value for a control variable is determined based on the comparison wherein the correction value is stored and an error is detected if the correction value changes abruptly.

### Summary of the Invention

According to the invention, it is provided a method for operating a combustion engine by detecting the hardware manipulation according to claim 1, the device and the system according to the further independent claims.

Further embodiments are indicated in the depending subclaims.

According to a first aspect a method for operating a motor system including a combustion engine having cylinders and injectors to inject fuel into the cylinders is provided, comprising the steps of:
- operating the combustion engine by providing a calculated injection quantity which corresponds to a fuel mass to be injected into the cylinders of the combustion engine to provide a motor torque;
- signaling a manipulation event depending on
   ∘ a first condition based on an estimated injected fuel quantity determined depending on an oxygen concentration and
   ∘ at least one of a second condition based on an injected fuel quantity delivered to the injectors and a third condition based on an adaption correction value obtained by an adaptation function for correcting measurements of a metering unit for delivering fuel towards the injectors.

Prior art techniques for manipulation detection include the risk of false detection. If the manipulation detection was based on the deviation of one parameter only, such as the measured vs. estimated oxygen concentration, it will suffer from uncertainty related to the actual system and dispersion related to series production and aging of components over lifetime.

Above method performs manipulation detection at substantially the same time by verifying a first condition related to a fuel mass related quantity downstream the combustion and by verifying a second and/or third condition related to a fuel mass related quantity upstream the combustion. If both conditions (either one of first and second conditions or first and third conditions) are fulfilled, a manipulation event can be detected which may be signaled accordingly. Therefore, a combination of conditions will be verified both related to the torque generation based on the oxygen concentration of the exhaust gases and the mass flow of the delivered fuel mass.

According to the first condition, the injected fuel quantity may be estimated based on the lambda monitoring, i.e. an oxygen concentration in the exhaust gas, which indicates a fuel quantity burnt in the cylinders. The estimated injected fuel quantity may be compared with the injection quantity that corresponds to the fuel mass the control unit has commanded to inject. According to the second condition, the plausibility of the fuel amount delivered to the injection system may be monitored by using a metering unit and by the injection quantity that the control unit has controlled to inject. According to the third condition the behavior of an adaptation function related to the metering unit is monitored.

Thereby, a manipulation by a single manipulation device can be detected independently of a position where the manipulation device is arranged. Further, the manipulation detection can be made robust as uncertainties such as component variation related to series production and aging of components can be excluded and because the verification is performed on parameters before and after the combustion in the cylinders. The above method for detecting a manipulation can be performed in the electronic control unit just by using existing sensors of a conventional motor system.

Furthermore, it may be provided that the first condition is fulfilled if a first deviation between the estimated injected fuel quantity and the injection quantity is larger than a predetermined first threshold.

Moreover, the predetermined first deviation threshold may be set depending on the injections quantity. Further, the first deviation can be evaluated with respect to a given first deviation threshold which can be applied according to the type of engine and the respective application.

It may be provided that the estimated fuel quantity is calculated by determining the oxygen mass in the exhaust gas based on the oxygen concentration, by determining the air mass supplied to the cylinders, by determining an amount of oxygen burnt in the cylinders depending on the oxygen mass and the air mass supplied to the cylinders and by calculating the injected fuel quantity based on the amount of oxygen burnt in the cylinders.

Moreover, it may be provided that the second condition is fulfilled if a second deviation is larger than a given second deviation threshold, wherein the second deviation corresponds to a deviation between a modelled or measured fuel quantity indicating the fuel mass supplied towards the injectors and the calculated injection quantity.

Particularly, the predetermined second deviation threshold may be set depending on the injections quantity and the speed of the combustion engine.

It may be provided that the third condition is fulfilled if a deviation of an adaption correction value from a given reference adaption correction value is larger than a predetermined correction value threshold, wherein the adaption correction value is determined by an adaptation function used for adapting the operation of a metering unit for measuring the fuel mass flow in a fuel delivery system of the motor system, wherein the reference adaption correction value is determined as an average or filtered value of the characteristics of previous adaption correction values. Particularly, the predetermined correction value threshold may be set depending on the injections quantity and/or the speed of the combustion engine.

Furthermore, the method may be performed only when all enabling conditions of a given set of enabling conditions are fulfilled.

The signaling may include an output of a visual or acoustic signal or a storing of an error flag in a memory.

Particularly, the combustion engine may be operated according to a signaling of the manipulation event.

According to a further aspect there is provided a device, particularly an electronic control unit, for operating a motor system including a combustion engine having cylinders and injectors to inject fuel into the cylinders, the device being configured to:
- operate the combustion engine by providing a calculated injection quantity which corresponds to a fuel mass to be injected into the cylinders of the combustion engine to provide a motor torque;
- signal a manipulation event depending on
   ∘ a first condition based on an estimated injected fuel quantity determined depending on an oxygen concentration, and
   ∘ at least one of a second condition based on an injected fuel quantity delivered to the injectors and a third condition based on an adaption correction value obtained by an adaptation function for correcting measurements of a metering unit for delivering fuel towards the injectors.

According to a further aspect a motor system is provided comprising a combustion engine and the above device.

### Brief Description of the Drawings

Embodiments are described in more detail in conjunction with the accompanying drawings in which:
- Figure 1: shows a block diagram of a Diesel motor system including a combustion engine; and
- Figure 2: shows a flowchart illustrating the steps of the method for operating the motor system and for detecting a manipulation of the motor system aiming to boost power of the combustion engine.

### Description of Embodiments

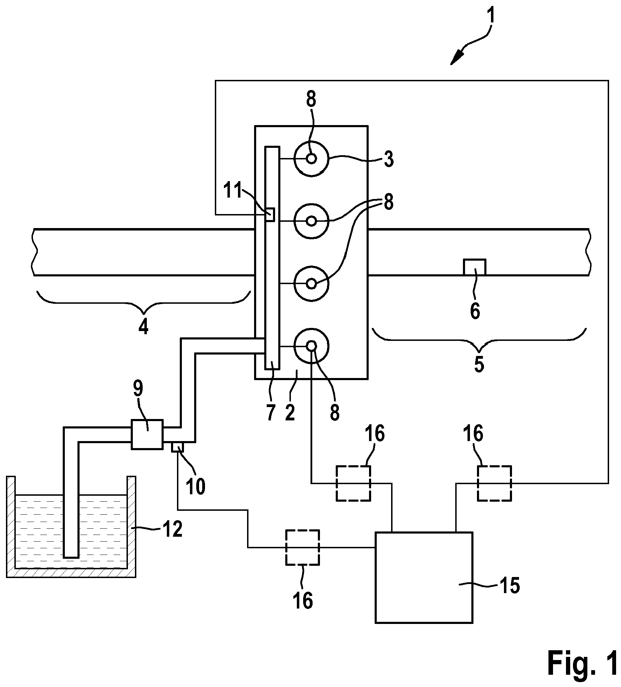

Figure 1 schematically shows a block diagram of a motor system 1 including a combustion engine 2 having a number of cylinders 3. The combustion engine 2 may e.g. be configured as a Diesel engine. Other embodiments may imply the use of an Otto engine.

Air is supplied via an air supply path 4 for delivering to the cylinders 3. Exhaust gas is pushed out of the cylinders 3 through an exhaust gas path 5. In the exhaust gas path 5, a lambda sensor 6 (LSU, UEGO, NOx sensor) is arranged to detect an oxygen concentration of the exhaust gas. The lambda sensor 6 is representative for any kind of O2 ratio sensor.

Fuel is delivered into the cylinders 3 via a common rail volume 7 which is connected to injectors 8 of each of the cylinders 3. Fuel is supplied from a fuel reservoir 12 to the common rail volume 7 under a common rail pressure via a fuel pump 9. Downstream the fuel pump 9, a metering unit 10 is provided to measure a fuel mass flow delivered by the fuel pump 9 into the common rail volume 7.

Furthermore, a pressure sensor 11 is arranged in the common rail volume 7.

Operation of the motor system 1 is controlled by an electronic control unit 15 in a conventional manner. According to a given desired motor torque, a fuel mass to be injected into the cylinders 3, i.e. the injection quantity, is calculated and the injectors 8 are controlled accordingly to deliver the determined fuel mass into the cylinders 3.

In operation, the fuel mass to be injected is determined in the electronic control unit 15 depending on sensor values of the lambda sensor 6, the metering unit 10 and the pressure sensor 11 as well as depending on a variety of other detected or modelled state parameters and/or state quantities of the motor system 1.

Furthermore, the electronic control unit 15 performs a process of controlling pressure in the common rail volume 7 onto a preset pressure by setting the fuel mass delivered by the fuel pump 9.

In addition to the normal operation of the electronic control unit 15, it is implemented a process for determining a manipulation of the motor system 1, particularly a hardware manipulation where a manipulation device 16 may be used to manipulate sensor values such as the pressure detected by the pressure sensor 11, to manipulate sensor values such as the metering unit 10, or may be used to manipulate the driving characteristics of the injectors 8, e.g. to prolong the energizing time of the injectors to inject more fuel into the cylinders 3. The possible arrangement of the manipulation device 16 is indicated in Figure 1 by dashed boxes. Manipulation devices 16 are used to boost power of the engine 2 beyond the nominal power. Such manipulations cause excessive load onto motor system components leading to a higher failure rate and reduced lifetime.

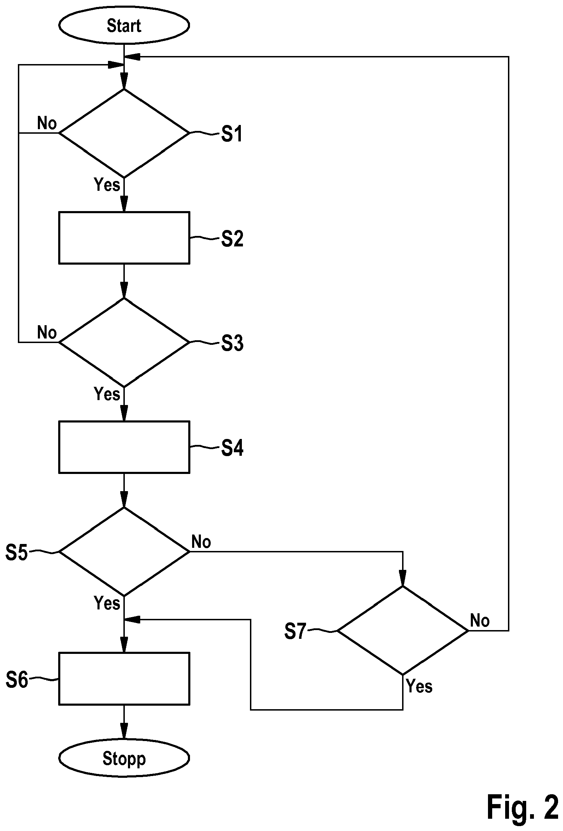

After removal of the manipulation devices, the manipulation is hard to retrace/to prove. Therefore, the electronic control unit 15 (or any other manipulation detection unit) is configured to perform a method as described in conjunction with the flowchart of Fig. 2. The method may be implemented in software and/or hardware which may be carried out in the electronic control unit 15 or any other data processing unit.

In step S1, it is checked if enabling conditions are fulfilled. If enabling conditions are fulfilled (Alternative: yes), the method is continued with step S2, otherwise (Alternative. No) it is waited until all enabling conditions are fulfilled and returned to step S1.

The enabling conditions may include one or more of the following:
- The (optionally low pass filtered) gradient of the expected oxygen concentration calculated in the electronic control unit from the actual injection quantity, i.e. the fuel mass to be injected, shall remain within two given gradient thresholds for a predetermined time in order to ensure that the motor system 1 is operated in a steady state.
- The engine speed is within a predetermined specific range in order to limit the monitoring to reliable working points.
- The injection quantity has to be in a specific predetermined range in order to limit the monitoring to reliable working points.
- Furthermore, the full operability of the lambda sensor 6 has to be given. This function called dew-point detection which is a function depending on a temperature of the lambda sensor 6 and the time after the start-up of the combustion engine 2 indicating when the lambda sensor 6 supplies reliable signals and can be switched active.
- Moreover, the monitoring shall be active only in specific engine operating modes, e.g. in a DPF (Diesel Particle Filter) regeneration mode, the manipulation detection is prevented due to the risk of maldetection because late injection may lead to a loss of accuracy of sensing the oxygen concentration.
- Furthermore, the quality of the oxygen concentration signal provided by the lambda sensor according to a self-diagnosis routine has to be sufficient.

In step S2, a deviation between a first estimated injected fuel quantity which may be determined based on the detected oxygen concentration and an injection quantity which corresponds to the calculated fuel quantity that the electronic control unit 15 is intending to inject into the cylinders 3 is calculated.

The oxygen concentration may be sensed by the lambda sensor 6 usually located in the exhaust gas path 5 upstream the catalyst or SCR (selective catalytic reduction). For determining the first estimated injected fuel quantity an oxygen mass in the exhaust gas is derived from the oxygen concentration and subtracted from the oxygen mass in the air mass supplied into the cylinders 3. The remaining oxygen mass has been burnt in the cylinders 3 relative to the actual true fuel mass injected.

In step S3, as a first condition it is checked if the calculated deviation is within a deviation threshold indicating a maximum allowed deviation that has been preset depending on the type of engine. The preset deviation threshold is calibrated and provided depending on the injection quantity. For instance, the deviation threshold can be provided as increasing as the injection quantity increases. Deviation thresholds can be given based on a look-up table depending on the injection quantity.

If it is determined that the deviation between the calculated injection quantity and the first estimated injected fuel quantity is more than the provided deviation threshold (alternative: Yes), the method is continued by step S4, otherwise it is returned to step S1.

In step S4, a second deviation between a second estimated or measured fuel quantity indicating the fuel mass supplied to the common rail volume 7 and one of the calculated injection quantity and a given threshold indicative for a nominal system is determined. The second estimated fuel quantity can be modelled or measured by the metering unit 10 detecting the mass flow of fuel into the common rail volume 7. As pressure in the common rail volume 7 is controlled to be constant the mass flow into the common rail volume 7 and the mass flow out of the common rail volume 7 is kept equal.

In step S5, as a second condition it is checked if the deviation between the second estimated or measured fuel quantity supplied to the common rail volume 7 is higher that one of the calculated injection quantity and a given threshold indicative for a nominal system. If positive (Alternative: Yes), the method is continued with step S6. Otherwise, it is continued with step S7.

The second deviation threshold can be constant or provided depending on the calculated injection quantity. As in difference to the oxygen concentration for the first deviation threshold the mass flow strongly depends on the engine speed the second deviation threshold is further selected depending on the engine speed. So, the second deviation threshold may be set according to a function, e.g. given by a lookup table, and may increase as the engine speed increases and/or the injection quantity increases.

However, the operation of the metering unit 10 is adapted by a known adaption function to correct negative or positive drifts of the fuel injection system. The relevant adaptation correction values are sensitive to manipulation. As a third condition, to ensure a robust detection against a manipulation adaptation correction values determined by the adaptation function are monitored in step S7. If it is determined in step S7 that a gradient or change of the adaptation correction values is larger than a predetermined correction value threshold (Alternative: Yes), the third condition is fulfilled and the method is continued with step S6. Otherwise it is returned to step S1.

The monitoring of absolute fuel quantity might be insufficient to detect a manipulation condition especially in case of a strong negative drift of the fuel injection system. So, the adapted volume flow value could remain below the threshold thereby not fulfilling the condition of step S5. Hence, an additional check may be implemented in order to evaluate how the adaptation correction values change over time and driving cycles. This allows to increase robustness of the detection of the manipulation condition.

In case of a pressure increase in the common rail volume 7, which is caused by a system manipulation, the adaptation correction value would increase as well and the difference with respect to reference adaptation correction values of a reference motor system can be used to detect a manipulation. The correction value threshold may be set constant or preset depending on the injection quantity and/or the engine speed which may be determined by means of a look-up table or the like.

If the comparison between the current adaptation correction value and the reference adaptation correction value corresponding to average adaptation correction value learned during a previous driving cycle results in a deviation, the third condition according to step S7 is fulfilled. To obtain the reference adaptation correction value, adaption correction values of previous detection cycles are permanently stored and the stored adaption correction values are averaged to obtain the reference adaptation correction value.

When the method arrives in step S6, a manipulation has been detected and is signaled correspondingly. The signaling may include a visual or acoustic signal initiated by the electronic control unit 15 or may be result in storing an error flag or manipulation flag in a non-erasable memory of the electronic control unit 15.

## Claims

1. Method for operating a motor system (1) including a combustion engine (2) having cylinders (3) and injectors (8) to inject fuel into the cylinders (3), comprising the steps of:
- operating the combustion engine (2) by providing a calculated injection quantity which corresponds to a fuel mass to be injected into the cylinders (3) of the combustion engine (2) to provide a motor torque;
- signaling a manipulation event depending on
∘ a first condition based on an estimated injected fuel quantity determined depending on an oxygen concentration, and
∘ at least one of a second condition based on an injected fuel quantity delivered to the injectors (8) and a third condition based on an adaption correction value obtained by an adaptation function for correcting measurements of a metering unit for delivering fuel towards the injectors (8).

2. Method according to claim 1, wherein the first condition is fulfilled if a first deviation between the estimated injected fuel quantity and the injection quantity is larger than a predetermined first threshold.

3. Method according to claim 2, wherein the predetermined first deviation threshold is set depending on the injection quantity.

4. Method according to any of the claims 1 to 3, wherein the estimated fuel quantity is calculated by determining the oxygen mass in the exhaust gas based on the oxygen concentration, by determining the air mass supplied to the cylinders, by determining an amount of oxygen burnt in the cylinders (3) depending on the oxygen mass and the air mass supplied to the cylinders and by calculating the injected fuel quantity based on the amount of oxygen burnt in the cylinders (3).

5. Method according to any of the claims 1 to 4, wherein the second condition is fulfilled if a second deviation between the second estimated or measured fuel quantity indicating the fuel mass supplied towards the injectors (8) is larger than one of the calculated injection quantity and a given threshold indicative for a nominal system.

6. Method according to claim 5, wherein the predetermined second deviation threshold is set depending on the injections quantity and the speed of the combustion engine (2).

7. Method according to any of the claims 1 to 6, wherein the third condition is fulfilled if a deviation of an adaption correction value from a given reference adaption correction value is larger than a predetermined correction value threshold, wherein the adaption correction value is determined by an adaptation function used for adapting the operation of a metering unit for measuring the fuel mass flow in a fuel delivery system of the motor system, wherein the reference adaption correction value is determined as an average or filtered value of the characteristics of previous adaption correction values.

8. Method according to claim 7, wherein the predetermined correction value threshold is set depending on the injection quantity and/or the speed of the combustion engine (2).

9. Method according to any of the claims 1 to 8, wherein the method is performed only when all enabling conditions of a given set of enabling conditions are fulfilled.

10. Method according to any of the claims 1 to 9, wherein the signaling includes an output of a visual or acoustic signal or a storing of an error flag in a memory.

11. Method according to claim 10, wherein the combustion engine (2) is operated according to a signaling of the manipulation event.

12. Device, particularly an electronic control unit (15), for operating a motor system (1) including a combustion engine (2) having cylinders (3) and injectors (8) to inject fuel into the cylinders (3), the device being configured to:
- operate the combustion engine (2) by providing a calculated injection quantity which corresponds to a fuel mass to be injected into the cylinders (3) of the combustion engine (2) to provide a motor torque;
- signal a manipulation event depending on
∘ a first condition based on an estimated injected fuel quantity determined depending on an oxygen concentration, and
∘ at least one of a second condition based on an injected fuel quantity delivered to the injectors (8) and a third condition based on an adaption correction value obtained by an adaptation function for correcting measurements of a metering unit for delivering fuel towards the injectors (8).

13. Motor system (1) comprising a combustion engine (2) and the device according to claim 12.

14. Computer program product for operating a motor system (1) including a combustion engine (2) having cylinders (3) and injectors (8) to inject fuel into the cylinders (3), including a software code that when operated on a data processing unit is configured to
- operate the combustion engine (2) by providing a calculated injection quantity which corresponds to a fuel mass to be injected into the cylinders (3) of the combustion engine (2) to provide a motor torque;
- signal a manipulation event depending on
∘ a first condition based on an estimated injected fuel quantity determined depending on an oxygen concentration, and
∘ at least one of a second condition based on an injected fuel quantity delivered to the injectors (8) and a third condition based on an adaption correction value obtained by an adaptation function for correcting measurements of a metering unit for delivering fuel towards the injectors (8).

15. Machine readable storage medium having stored the computer program product according to claim 14.
